# EUROPÄISCHE PATENTANMELDUNG

(11) **EP 0 980 182 A1**
(43) Veröffentlichungstag der Anmeldung: **16.02.2000**
(21) Anmeldenummer: 99250225.2
(22) Anmeldetag: 07.07.1999
(51) Int. Cl.: H04N 5/33

(54) **Verfahren und Vorrichtung zur Aufnahme optischer Eigenschaften einer relativbewegten Szene**

(30) Priorität: 12.08.1998 DE 19837483
(71) Anmelder: Deutsches Zentrum für Luft- und Raumfahrt e.V., 53175 Bonn (DE)
(72) Erfinder: Skrbek, Wolfgang, 10369 Berlin (DE); Peschel, Michael, 12527 Berlin (DE); Zender, Bernd, 13088 Berlin (DE); Lorenz, Eckehard, 12621 Berlin (DE); Neidhardt, Michael, 15537 Berlin (DE)
(74) Vertreter: Zucker, Volker, Dipl.-Ing.

(57) **Zusammenfassung**

Die Erfindung betrifft ein Verfahren und eine Vorrichtung (1) zur Aufnahme optischer Eigenschaften der Thermalen Infrarot Emission, einer relativbewegten Szene, umfassend einen photosensitiven Sensor (2) im IR-Bereich und ein mit dem Sensor (2) verbundenes erstes Datenregister (3), wobei dem ersten Datenregister (3) ein zweites Datenregister (4) nachgeordnet ist, dem ersten Datenregister (3) ein Schwellwertfilter (5) zugeordnet ist, der mit einem Markierungsregister (6) verbunden ist, das mit einem Steuergerät (7) und Korrekturprozessor (8) verbunden ist, wobei das Steuergerät (7) mit Steuereingängen des Sensors (2) verbunden ist und dem Korrekturprozessor (8) eingangsseitig mit dem ersten Datenregister (3) und dem Steuergerät (7) und ausgangsseitig mit dem zweiten Datenregister (4) verbunden ist.

## Beschreibung

Die Erfindung betrifft ein Verfahren und eine Vorrichtung zur Aufnahme optischer Eigenschaften einer relativbewegten Szene für Thermal-Infrarot Untersuchungen in Fernerkundungssystemen.

Zur Untersuchung der Erdoberfläche ist es seit langem bekannt, optische Aufnahmesysteme auf einem Satelliten oder einem Flugzeug anzuordnen, wobei je nach Anwendungsgebiet verschiedene optische Eigenschaften bzw. Emissionen einer Szene qualitativ und/oder quantitativ ausgewertet werden. Im Gegensatz zu den meisten Anwendungsgebieten in Produktionsprozessen existieren nur wenige oder gar keine Vorabinformationen über die aufzunehmende Szene.

So arbeiten beispielsweise bekannte Fernerkundungssysteme im Thermalen Infrarot auf Basis optomechanischer Systeme. Diese mechanischen Systeme tasten die Szenen in sequentieller Form ab. Nachteilig an den bekannten Systemen ist, daß diese nicht ausreichend variabel in bezug auf Abtastung im Subpixelbereich sind. Durch die mechanische Abtastung sind die Kanalparameter nicht in Echtzeit beeinflußbar. Allgemein sind die hierfür verwendeten Infrarot-Sensoren auf maximale Empfindlichkeit eingestellt. Dies führt dazu, daß bei Abtastung einer lokal begrenzten heißen Szene die Sensorik übersteuert wird. Dadurch kann über diese Szene bzw. Szenenausschnitt nur eine qualitative Aussage getroffen werden.

Der Erfindung liegt daher das technische Problem zugrunde, ein Verfahren und eine Vorrichtung zur Aufnahme optischer Eigenschaften einer relativbewegten Szene für Thermal-Infrarot Untersuchungen für Fernerkundungssysteme zu schaffen, mittels derer auch lokale Maxima quantitativ erfaßbar sind.

Die Lösung des technischen Problems ergibt sich durch die Gegenstände mit den Merkmalen der Patentansprüche 1 und 2. Dabei wird ausgenutzt, daß die Meß- bzw. Intergrationszeit nur ein Bruchteil der zur Verfügung stehenden Zeit t_{dwell} beträgt, innerhalb der eine Zuordnung zwischen Szenenpixel und Sensorpixel existiert. Nach der ersten Messung mit maximaler Empfindlichkeit des Sensors wird überprüft, ob ein Pixel übersteuert war, so daß dann in der verbleibenden Zeit eine erneute Messung mit maximal eingestellter Empfindlichkeit des Sensors wiederholt werden kann. Anschließend werden dann die übersteuerten Pixel der ersten Messung durch die Daten der zweiten Messung überschrieben. Dadurch ist eine quantitative Aussage über die Szene auch bei lokalen Maxima möglich. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die Fig. zeigen:

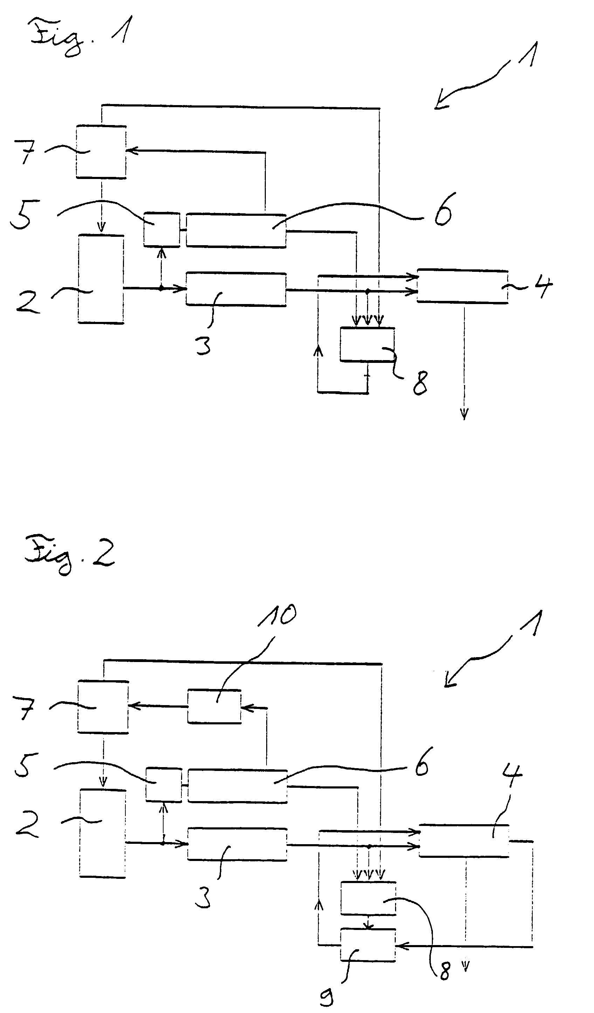

- Fig. 1: ein schematisches Blockschaltbild einer Vorrichtung mit einer wahlfreien Zugriffsvariante und
- Fig. 2: ein schematisches Blockschaltbild einer sequentiellen Überarbeitung.

Die Vorrichtung 1 zur Aufnahme optischer Eigenschaften einer relativbewegten Szene umfaßt einen photosensitiven Sensor 2, ein erstes Datenregister 3, ein zweites Datenregister 4, einen Schwellwertfilter 5, ein Markierungsregister 6, ein Steuergerät 7 und einen Korrekturprozessor 8. Der Sensor 2 ist ausgangsseitig mit dem ersten Datenregister 3 und dem Schwellwertfilter 5 verbunden. Der Schwellwertfilter 5 ist mit dem Markierungsregister 6 verbunden. Ein Steuerausgang des Markierungsregisters 6 ist mit einem Eingang des Steuergerätes 7 verbunden, über das der Sensor 2 in seiner Empfindlichkeit veränderbar ist. Die aktuellen Einstellungen des Steuergerätes 7 und die Daten den Markierungsregisters 6 und des ersten Datenregisters 3 sind über entsprechende Datenleitungen auf die Dateneingänge des Korrekturprozessors 8 geführt, der ausgangsseitig mit einem Dateneingang des zweiten Datenregisters 4 verbunden ist. Der Sensor 2 ist vorzugsweise als lineares Array ausgebildet, auf den die zu untersuchende optische Strahlung mittels einer nicht dargestellten Eingangsoptik abgebildet wird. Aufgrund der Relativbewegung zwischen Szene und Vorrichtung 1 ist ein Pixel der Szene nur innerhalb eines Zeitraumes t_{dwell} einem Pixel auf der Szene zugeordnet, so daß eine Messung innerhalb dieses Zeitraumes durchgeführt werden muß, was als Push Broom Prinzip im Bereich der optischen Fernerkundung seit langem bekannt ist.

Soll nun beispielsweise ein Gebiet im Thermal-Infrarot untersucht werden, so wird zunächst der Sensor 2 durch das Steuergerät 7 auf maximale Empfindlichkeit eingestellt, um auch noch minimale Emissionen zu erfassen, wobei die Abtastzeit beispielsweise 0,1 · t_{dwell} beträgt. Nach der Abtastzeit wird der Sensor 2 ausgelesen und die Daten in das erste Datenregister 3 geschrieben. Erfaßt der Schwellwertfilter 5 keine Übersteuerung eines Pixels, so wird das Datum vom ersten Datenregister 3 in das zweite Datenregister 4 geschrieben, wo es dann für weitere Untersuchungen bzw. Signalverarbeitungen zur Verfügung steht. Wird nun eine starke lokale IR-Quelle erfaßt, so wird der Sensor 2 im Pixelbereich der lokalen Quelle aufgrund der maximalen Empfindlichkeit übersteuert. Wieder werden die Daten in das erste Datenregister 3 geschrieben. Der Schwellwertfilter 5 erfaßt jedoch die Pixel, die übersteuert waren und Kennzeichnet bzw. markiert diese im Markierungsregister 6. Aufgrund der erfaßten Übersteuerung erzeugt dann das Markierungsregister 6 oder der Schwellwertfilter 5 ein Steuersignal für das Steuergerät 7. Das Steuersignal beinhaltet im wesentlichen zwei Informationen nämlich einerseits die Empfindlichkeit des Sensors auf ihren maximalen Wert einzustellen und andererseits eine erneute Messung der Szene innerhalb der verbleibenden Zeit t_{dwell} vorzunehmen. Die im ersten Datenregister 3 stehenden Daten werden in das zweite Datenregister 4 geschrieben und die Daten des Sensors 2 der erneuten Messung in das erste Datenregister 3 übernommen. Anhand der Markierung im Markierungsregister 6 kennt der Korrekturprozessor 8 die Adressen der Pixel, die bei der ersten Messung übersteuert waren. Der Korrekturprozessor 8 überschreibt dann die Pixel-Daten im zweiten Datenregister 4, die bei der ersten Messung übersteuert waren, mit den entsprechenden Daten von der zweiten Messung, wobei zur späteren signaltechnischen Auswertung den überschriebenen Pixeln ein Statusbit zugeordnet werden kann, ob die Daten in der ersten oder zweiten Messung gewonnen wurden.

In der Fig. 2 ist eine alternative Ausführungsform dargestellt. Da Sensor 2 vorzugsweise als lineares integriertes Array von beispielsweise 512 x 2 Pixelelementen ausgebildet ist, d.h. jeweils 512 Photodioden sind hintereinander angeordnet, wobei aufgrund des redundanten Aufbaus die eine oder andere Zeile ausgewählt werden kann, je nachdem, welche Zeile weniger Defekte aufweist. Daher bietet es sich an, die ersten und zweiten Datenregister 3, 4 als Schieberegister auszubilden. Dadurch kann der Steuerungsaufwand für den Korrekturprozessor 8 vereinfacht werden. Hierzu werden die Ausgänge des zweiten Datenregisters 4 und des Korrekturprozessors 8 auf ein Tor 9 geschaltet, dessen Ausgang auf den Eingang des zweiten Datenregisters 4 geschaltet ist. Das Tor 9 ist im einfachsten Fall ein Multiplexer. Nach der zweiten Messung sind die Daten der ersten Messung im zweiten Datenregister 4 und die Daten der zweiten Messung im ersten Datenregister 3. Die Informationen hinsichtlich der Übersteuerung der ersten Messung sind im Markierungsregister 6, das ebenfalls als Schieberegister ausgebildet ist, abgelegt. Im Markierungsregister 6 steht beispielsweise eine logische 1 bei Übersteuerung und eine logische 0 bei einem Meßwert innerhalb der Empfindlichkeit. Werden nun die drei Register 3, 4, 6 sequentiell ausgelesen, so werden die Daten des ersten Datenregisters 3 und des Markierungsregister 6 dem Korrekturprozessor 8 zugeführt, wobei dann die Daten des ersten Datenregisters 3 am Eingang des Tors 9 liegen. Die Daten des zweiten Datenregisters 4 liegen dann am anderen Eingang des Tors 9 an. Ist der Wert des Markierungsregisters 6 eine logische 0, so wird das Tor 9 für den Korrekturprozessor 8 gesperrt und für das zweite Datenregister 4 geöffnet, so daß das Datum vom zweiten Datenregister 4 von seinem Ausgang zu einem Eingang durchgeschleift und wieder eingelesen wird. Ist hingegen der Wert des Markierungsregisters 6 eine logische 1, so wird das Datum vom Korrekturprozessor 8 in das zweite Datenregister 4 eingeschrieben. Aus signaltechnischen Gründen kann das Steuersignal für das Steuergerät 7 auch durch einen separaten Trigger 10 erzeugt werden.

## Patentansprüche

1. Verfahren zur Aufnahme optischer Eigenschaften einer relativbewegten Szene für Thermal-Infrarot Untersuchungen in Fernerkundungssystemen, mittels eines photosensitiven Sensors (2) im IR-Bereich, eines Speichers, eines Schwellwertfilters (5), eines Steuergerätes (7) und eines Korrekturprozessors (8), umfassend folgende Verfahrensschritte:
a) Durchführen einer ersten Messung bei maximaler Empfindlichkeit des Sensors (2),
b) Überprüfen mittels des Schwellwertfilters (5), ob ein Pixel des Sensors (2) bei der Messung übersteuert war,
c) Wiederholen der Messung innerhalb von t_{dwell} mit minimaler Empfindlichkeit des Sensors (2), falls eine Übersteuerung in Verfahrensschritt b) erfaßt wurde und
d) Überschreiben der übersteuerten Pixel aus Verfahrensschritt a) durch die Daten der Messung gemäß Verfahrensschritt c).

2. Vorrichtung zur Durchführung des Verfahrens nach Anspruch 1, umfassend einen photosensitiven Sensor im IR-Bereich und ein mit dem Sensor verbundenes erstes Datenregister,
**dadurch gekennzeichnet, daß**
dem ersten Datenregister (3) ein zweites Datenregister (4) nachgeordnet ist, dem ersten Datenregister (3) ein Schwellwertfilter (5) zugeordnet ist, der mit einem Markierungsregister (6) verbunden ist, das mit einem Steuergerät (7) und Korrekturprozessor (8) verbunden ist, wobei das Steuergerät (7) mit Steuereingängen des Sensors (2) verbunden ist und dem Korrekturprozessor (8) eingangsseitig mit dem ersten Datenregister (3) und dem Steuergerät (7) und ausgangsseitig mit dem zweiten Datenregister (4) verbunden ist.

3. Vorrichtung nach Anspruch 2, dadurch gekennzeichnet, daß zwischen Markierungsregister (6) und Steuergerät (7) ein Trigger (10) angeordnet ist.

4. Vorrichtung nach Anspruch 2 oder 3, dadurch gekennzeichnet, daß die ersten und zweiten Datenregister (3, 4) als Schieberegister ausgebildet sind und zwischen zweiten Datenregister (4) und Korrekturprozessor (8) ein Tor (9) angeordnet ist.
